(19) Europäisches Patentamt
European Patent Office
Office européen des brevets

(11) **EP 4 570 626 A1**

(12) **EUROPEAN PATENT APPLICATION**

(43) Date of publication:
**18.06.2025  Bulletin 2025/25**

(21) Application number: **24215419.3**

(22) Date of filing: **26.11.2024**

(51) International Patent Classification (IPC):
**B62D 15/02** $^{(2006.01)}$       **B62D 6/00** $^{(2006.01)}$
**B62D 5/04** $^{(2006.01)}$

(52) Cooperative Patent Classification (CPC):
**B62D 15/029;** B62D 5/046; B62D 5/0469;
B62D 5/0481; B62D 5/0487; B62D 5/049;
B62D 5/0496; B62D 6/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.12.2023  JP 2023211274**

(71) Applicant: **JTEKT CORPORATION
Kariya-shi, Aichi-ken, 448-8652 (JP)**

(72) Inventors:
• **MATSUDA, Satoshi
  Kariya-shi, Aichi-ken,, 448-8652 (JP)**

• **NAMIKAWA, Isao
  Kariya-shi, Aichi-ken,, 448-8652 (JP)**
• **ANRAKU, Koji
  Kariya-shi, Aichi-ken,, 448-8652 (JP)**
• **IIDA, Tomoyuki
  Toyota-shi, Aichi-ken,, 471-8571 (JP)**
• **YAMASHITA, Masaharu
  Toyota-shi, Aichi-ken,, 471-8571 (JP)**
• **SHIBATA, Kenji
  Toyota-shi, Aichi-ken,, 471-8571 (JP)**

(74) Representative: **Winter, Brandl - Partnerschaft
mbB
Alois-Steinecker-Straße 22
85354 Freising (DE)**

(54) **STEERING CONTROL DEVICE**

(57)     A steering control device (1) includes a processing circuit. The processing circuit is configured to control a reaction force motor (12) configured to generate a steering reaction force applied to a steering wheel (5) separated from turning wheels (6) of a vehicle in terms of power transmission. The processing circuit is configured to control a turning motor (31) configured to generate a turning force for turning the turning wheels (6). The processing circuit is configured to, in a case where an event in which an output of the turning motor (31) is limited has occurred, execute reaction force change processing of changing the steering reaction force according to contents of the event.

FIG. 2

EP 4 570 626 A1

## Description

BACKGROUND OF THE INVENTION

1. Field of the Invention

The invention relates to a steering control device.

2. Description of Related Art

A so-called steer-by-wire type steering device is known that separates power transmission between a steering wheel and turning wheels. The steering device has a reaction force motor that is a source of a steering reaction force applied to a steering shaft, and a turning motor that is a source of a turning force that turns the turning wheels. When a vehicle is traveling, a control device of the steering device generates a steering reaction force through the reaction force motor and turns the turning wheels through the turning motor.

For example, a control device of Japanese Unexamined Patent Application Publication No. 2020-83059 (JP 2020-83059 A) executes output limitation processing of limiting an output of a turning motor and reaction force increase processing of increasing a steering reaction force when an output limit condition is satisfied. The output limit condition includes a condition that a temperature of the turning motor exceeds a temperature threshold value or a condition that a voltage supplied from a power source device to the turning motor is less than a voltage threshold value. The steering reaction force increases in synchronization with limitation of the output of the turning motor. Therefore, a driver can recognize that a turning follow-up capability of the turning wheels may decrease by responsive feeling through the steering wheel.

SUMMARY OF THE INVENTION

When limiting the output of the turning motor, the control device of JP 2020-83059 A simply increases the steering reaction force. There is a demand to appropriately notify a driver of a vehicle that the output of the turning motor is limited.

A steering control device according to an aspect of the invention includes a processing circuit. The processing circuit is configured to control a reaction force motor configured to generate a steering reaction force applied to a steering wheel that is separated from turning wheels of a vehicle in terms of power transmission, control a turning motor configured to generate a turning force for turning the turning wheels, and execute reaction force change processing of, in a case where an event in which an output of the turning motor is limited has occurred, changing the steering reaction force according to contents of the event.

With this configuration, in a case where the event in which the output of the turning motor is limited has occurred, the steering reaction force is changed according to the contents of the event. Therefore, as responsive feeling through the steering wheel, the driver of the vehicle can be given a different steering feel according to the contents of the event in which the output of the turning motor is limited. Therefore, the driver of the vehicle can recognize that the output of the turning motor is limited, and thus the contents of the event in which the output of the turning motor is limited by feeling the steering reaction force through the steering wheel as responsive feeling. Therefore, the driver of the vehicle can be appropriately notified that the output of the turning motor is limited.

In the steering control device according to the aspect of the invention, the processing circuit may be configured to execute processing of calculating an assist torque command value that is a torque in the same direction as a steering direction of the steering wheel based on a first state variable reflecting a steering state of the steering wheel, processing of calculating an axial force acting on a turning shaft that turns the turning wheels based on a second state variable reflecting a turning state of the turning wheels and calculating an axial torque by converting the calculated axial force into a torque with respect to the steering wheel, and processing of calculating a reaction torque command value that is a target value of the steering reaction force by subtracting the axial torque from the assist torque command value. In this case, the reaction force change processing may include processing of changing the assist torque command value and processing of changing the axial torque.

As in this configuration, in a case where the event in which the output of the turning motor is limited has occurred, the steering reaction force can be changed according to the contents of the event in which the output of the turning motor is limited by changing the assist torque command value and the axial torque.

In the steering control device according to the aspect of the invention, the first state variable may be a steering torque applied to the steering wheel. In this case, the processing of changing the assist torque command value may be processing of limiting the steering torque detected by a torque sensor according to the contents of the event.

As in this configuration, in a case where the event in which the output of the turning motor is limited has occurred, the assist torque command value can be changed according to the contents of the event by limiting the steering torque detected by the torque sensor according to the contents of the event.

In the steering control device according to the aspect of the invention, the second state variable may include a current of the turning motor and a target rotation angle of a pinion shaft configured to rotate in conjunction with the turning shaft. The axial force may include a mixed axial force in which a current axial force corresponding to a value of the current of the turning motor and an angle axial force corresponding to the target rotation angle of the pinion shaft are mixed. In this case, the processing circuit may be configured to, in the case where the event has occurred, execute processing of switching the axial force from the mixed axial force to the angle axial force.

With this configuration, in a case where the output of the turning motor is limited, the axial force used for calculating the axial torque is switched from the mixed axial force to the angle axial force. Since the angle axial force is not affected by the current of the turning motor, a more appropriate steering reaction force can be applied to the steering wheel.

In the steering control device according to the aspect of the invention, the processing circuit may be configured to, in the case where the event has occurred, execute processing of adjusting the assist torque command value such that the assist torque command value is adapted to a normal state in which the output of the turning motor is not limited, when the axial force is switched from the mixed axial force to the angle axial force.

The value of the angle axial force immediately after the axial force is switched from the mixed axial force to the angle axial force may fluctuate with respect to the value of the mixed axial force immediately before the axial force is switched from the mixed axial force to the angle axial force. In this regard, with the above configuration, in a case where the output of the turning motor is limited, the assist torque command value is adjusted to be adapted to a normal state in which the output of the turning motor is not limited. The steering reaction force is also adjusted according to the adjustment of the assist torque command value. Therefore, the fluctuation of the steering reaction force due to the difference in axial force that occurs before and after the axial force used for calculating the axial torque is switched from the mixed axial force to the angle axial force can be suppressed.

In the steering control device according to the aspect of the invention, the processing circuit may be configured to calculate a basic assist torque that is a basis for calculating the assist torque command value, based on the first state variable, and calculate the assist torque command value by multiplying the calculated basic assist torque by a gain corresponding to a vehicle speed. In this case, the processing of adjusting the assist torque command value may be processing of adjusting a value of the gain such that the assist torque command value is adapted to the normal state in which the output of the turning motor is not limited.

With this configuration, in a case where the output of the turning motor is limited, the value of the gain is adjusted such that the assist torque command value is adapted to a normal state in which the output of the turning motor is not limited. As a result, the assist torque command value is adapted to a normal state in which the output of the turning motor is not limited. Therefore, the fluctuation of the steering reaction force due to the difference in axial force that occurs before and after the axial force used for calculating the axial torque is switched from the mixed axial force to the angle axial force can be suppressed.

In the steering control device according to the aspect of the invention, the axial force may be an axial force obtained by adding a deviation compensation axial force corresponding to an angle deviation which is a difference between a steering angle of the steering wheel and a steering angle of the steering wheel converted from a rotation angle of the pinion shaft, to the mixed axial force. In this case, the processing circuit may be configured to, in the case where the event has occurred, execute processing of increasing a value of the deviation compensation axial force as compared with a normal state in which the output of the turning motor is not limited.

In a case where the output of the turning motor is limited, the turning follow-up capability of the turning wheels with respect to the steering of the steering wheel decreases. With the above configuration, in a case where the event in which the output of the turning motor is limited has occurred, the value of the deviation compensation axial force increases as compared with a normal state in which the output of the turning motor is not limited. Therefore, a decrease in turning follow-up capability of the turning wheels with respect to the steering of the steering wheel can be reflected in the steering reaction force.

In the steering control device according to the aspect of the invention, the event may include an abnormality of the vehicle or the turning motor, and the processing circuit may be configured to increase the steering reaction force as a degree of the abnormality increases.

With this configuration, in a case where the abnormality has occurred in the vehicle or the turning motor, the steering reaction force increases as the degree of the abnormality increases. Therefore, the driver of the vehicle can recognize that the abnormality has occurred in the vehicle or the turning motor, and thus the degree of the abnormality by feeling the steering reaction force through the steering wheel as responsive feeling.

With the steering control device according to the aspect of the invention, the driver of the vehicle can be appropriately notified that the output of the turning motor is limited.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

  FIG. 1 is a configuration diagram of a steering device on which a steering control device according to an embodiment is mounted;
  FIG. 2 is a block diagram of a reaction force control device and a turning control device according to the embodiment;

FIG. 3 is a block diagram of a reaction torque command value calculation unit according to the embodiment;

FIG. 4 is a graph for describing first limitation processing according to the embodiment;

FIG. 5 is a graph for describing second limitation processing according to the embodiment;

FIG. 6 is a graph for describing third limitation processing according to the embodiment;

FIG. 7 is a graph showing a first map according to the embodiment; and

FIG. 8 is a graph showing a second map according to the embodiment.

DETAILED DESCRIPTION OF EMBODIMENTS

Hereinafter, an embodiment of a steering control device will be described.

Overall Configuration

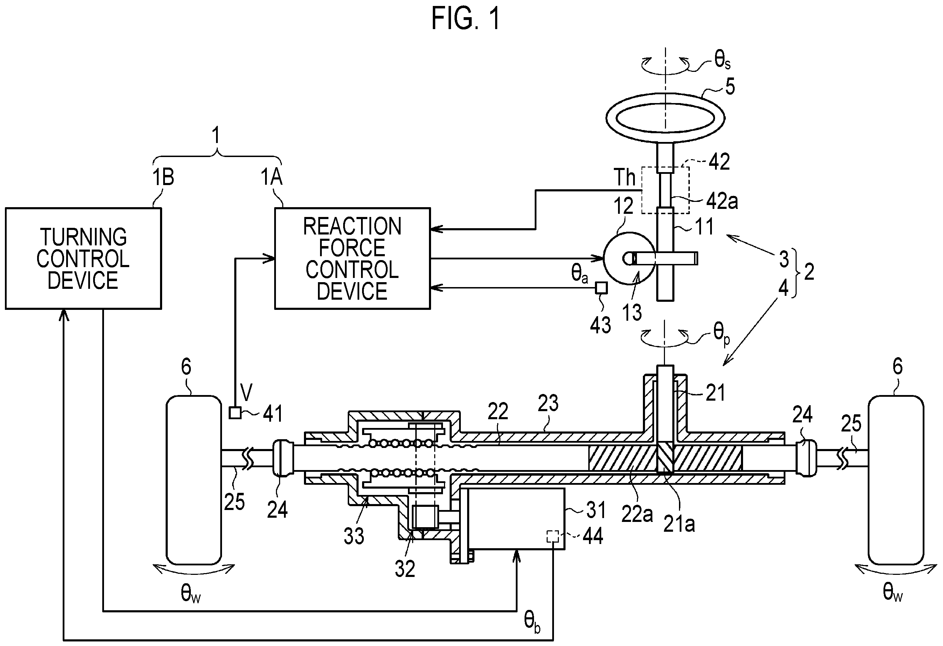

As shown in FIG. 1, a control target of a steering control device 1 is a steer-by-wire type steering device 2. The steering device 2 has a steering mechanism 3 and a turning mechanism 4. The steering mechanism 3 is a mechanism portion that is steered by a driver via a steering wheel 5. The turning mechanism 4 is a mechanism portion that turns turning wheels 6 of a vehicle in response to steering of the steering wheel 5. The steering control device 1 includes a reaction force control device 1A and a turning control device 1B. A control target of the reaction force control device 1A is the steering mechanism 3. The reaction force control device 1A executes reaction force control. The reaction force control device 1A is an example of a reaction force controller. A control target of the turning control device 1B is the turning mechanism 4. The turning control device 1B executes turning control. The turning control device 1B is an example of a turning controller.

The steering mechanism 3 has a steering shaft 11, a reaction force motor 12, and a speed reducer 13. The steering wheel 5 is connected to the steering shaft 11 to be rotatable together with the steering shaft 11. The reaction force motor 12 is a source of a steering reaction force applied to the steering shaft 11. The steering reaction force is a force in a direction opposite to a steering direction of the steering wheel 5. The reaction force motor 12 is, for example, a three-phase brushless motor. The speed reducer 13 reduces a rotational speed of the reaction force motor 12 and transmits the reduced rotational speed to the steering shaft 11.

The turning mechanism 4 has a pinion shaft 21, a turning shaft 22, and a housing 23. The housing 23 rotatably supports the pinion shaft 21. The housing 23 accommodates the turning shaft 22 such that the turning shaft 22 can reciprocate. The turning shaft 22 is separated from the steering wheel 5 in terms of power transmission. The pinion shaft 21 is provided to cross the turning shaft 22. Pinion teeth 21a of the pinion shaft 21 mesh with rack teeth 22a of the turning shaft 22. Tie rods 25 are connected to both ends of the turning shaft 22 via rack ends 24 formed of ball joints, respectively. A tip end of the tie rod 25 is connected to a knuckle (not shown) to which the turning wheel 6 is attached.

The turning mechanism 4 includes a turning motor 31, a power transmission mechanism 32, and a conversion mechanism 33. The turning motor 31 is a source of a turning force applied to the turning shaft 22. The turning force is a force for turning the turning wheels 6. The turning motor 31 is, for example, a three-phase brushless motor. The power transmission mechanism 32 is, for example, a belt power transmission mechanism. The power transmission mechanism 32 transmits rotation of the turning motor 31 to the conversion mechanism 33. The conversion mechanism 33 is, for example, a ball screw mechanism. The conversion mechanism 33 converts the rotation transmitted via the power transmission mechanism 32 into an axial movement of the turning shaft 22.

By moving the turning shaft 22 in an axial direction, a turning angle $\theta_w$ of the turning wheels 6 is changed. The pinion teeth 21a of the pinion shaft 21 mesh with the rack teeth 22a of the turning shaft 22. Therefore, the pinion shaft 21 rotates in conjunction with the movement of the turning shaft 22. The pinion shaft 21 is a shaft or a rotating body that rotates in conjunction with a turning operation of the turning wheels 6.

The reaction force control device 1A controls an operation of the reaction force motor 12. The reaction force control device 1A has a processing circuit including any one of the following three configurations A1, A2, A3.

A1. One or more processors that operate according to a computer program that is software. The processor includes a central processing unit (CPU) and a memory.

A2. One or more dedicated hardware circuits, such as an application-specific integrated circuit (ASIC), that executes at least a part of various kinds of processing. The ASIC includes a CPU and a memory.

A3. A hardware circuit in which the configurations A1 and A2 are combined.

The memory is a medium that is readable by a computer and stores a program in which processing or a command for the computer is written. In the present embodiment, the computer is a CPU. The memory includes a random access memory (RAM) and a read-only memory (ROM). The CPU executes various controls by executing the program stored in the memory in a predetermined calculation period.

The reaction force control device 1A receives a detection result of a sensor equipped in the vehicle. The sensor includes a vehicle speed sensor 41, a torque sensor 42, and a rotation angle sensor 43.

The vehicle speed sensor 41 detects a vehicle speed V. The vehicle speed V is a state variable reflecting a traveling state of the vehicle. The torque sensor 42 is provided in the steering shaft 11. The torque sensor 42 is located on the steering wheel 5 side with respect to a connecting portion of the speed reducer 13 in the steering shaft 11. The torque sensor 42 detects a steering torque $T_h$ applied to the steering shaft 11. The steering torque $T_h$ is calculated based on an amount of twist of a torsion bar 42a provided in the steering shaft 11. The steering torque $T_h$ is an example of a first state variable that reflects a steering state of the steering wheel 5. The rotation angle sensor 43 is provided in the reaction force motor 12. The rotation angle sensor 43 detects a rotation angle $\theta_a$ of the reaction force motor 12.

The steering torque $T_h$ and the rotation angle $\theta_a$ of the reaction force motor 12 are, for example, a positive value when the steering wheel 5 is steered to the right, and a negative value when the steering wheel 5 is steered to the left.

The reaction force control device 1A controls the operation of the reaction force motor 12 by using detection results of the vehicle speed sensor 41, the torque sensor 42, and the rotation angle sensor 43. The reaction force control device 1A controls power supply to the reaction force motor 12 such that a steering reaction force corresponding to the steering torque $T_h$ is generated in the reaction force motor 12.

The turning control device 1B controls an operation of the turning motor 31. The turning control device 1B has a processing circuit including any one of the three configurations A1, A2, A3 described above, as in the reaction force control device 1A.

The turning control device 1B receives a detection result of a sensor equipped in the vehicle. The sensor includes a rotation angle sensor 44. The rotation angle sensor 44 is provided in the turning motor 31. The rotation angle sensor 44 detects a rotation angle $\theta_b$ of the turning motor 31. The rotation angle $\theta_b$ of the turning motor 31 is, for example, a positive value when the steering wheel 5 is steered to the right, and is a negative value when the steering wheel 5 is steered to the left.

The turning control device 1B controls the operation of the turning motor 31 by using a detection result of the rotation angle sensor 44. The turning control device 1B controls power supply to the turning motor 31 such that the turning wheels 6 are turned according to the steering state of the steering wheel 5.

Configuration of Reaction Force Control Device 1A

Next, a configuration of the reaction force control device 1A will be described.

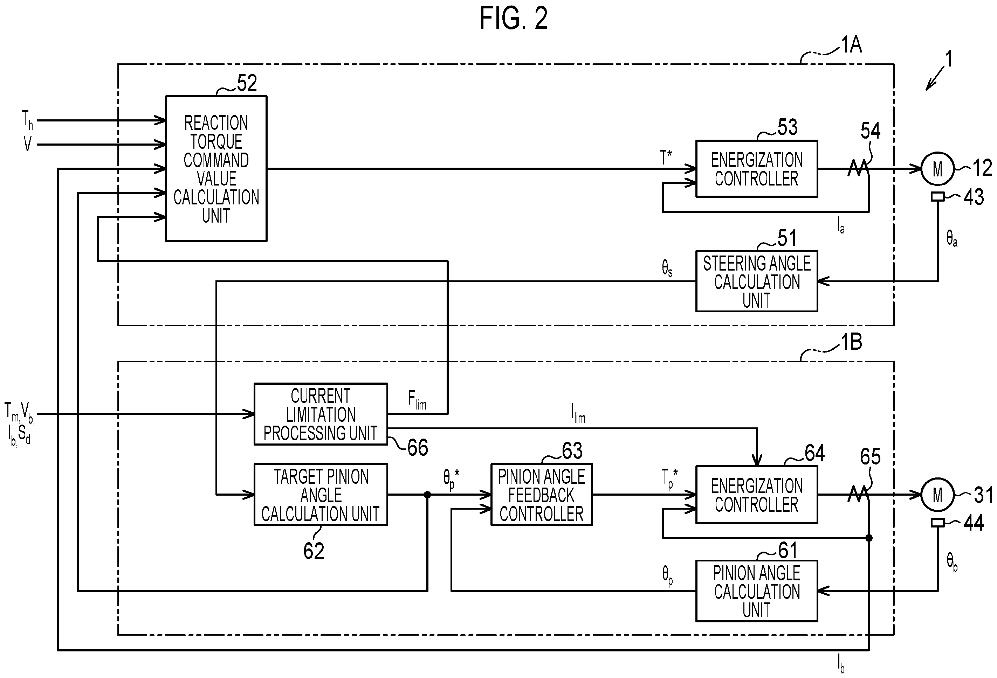

As shown in FIG. 2, the reaction force control device 1A includes a steering angle calculation unit 51, a reaction torque command value calculation unit 52, and an energization controller 53.

The steering angle calculation unit 51 calculates a steering angle $\theta_s$ of the steering wheel 5 based on the rotation angle $\theta_a$ of the reaction force motor 12 detected through the rotation angle sensor 43. The reaction torque command value calculation unit 52 calculates a reaction torque command value $T^*$ based on the steering torque $T_h$ and the vehicle speed V.

The reaction torque command value $T^*$ is a target value of the steering reaction force to be generated in the reaction force motor 12. The steering reaction force is a torque in a direction opposite to the steering direction of the steering wheel 5. As an absolute value of the steering torque $T_h$ is larger and the vehicle speed V is lower, an absolute value of the reaction torque command value $T^*$ is larger.

The energization controller 53 supplies electric power corresponding to the reaction torque command value $T^*$ to the reaction force motor 12. Specifically, the energization controller 53 calculates a current command value for the reaction force motor 12 based on the reaction torque command value $T^*$. The energization controller 53 detects a value of a current $I_a$ generated in a power supply path to the reaction force motor 12 through a current sensor 54 provided in the power supply path. A value of the current $I_a$ is a value of a current supplied to the reaction force motor 12. The energization controller 53 obtains a deviation between the current command value and the value of the current $I_a$, and controls power supply to the reaction force motor 12 such that the deviation is eliminated. As a result, the reaction force motor 12 generates a torque corresponding to the reaction torque command value $T^*$.

Configuration of Turning Control Device 1B

Next, a configuration of the turning control device 1B will be described.

As shown in FIG. 2, the turning control device 1B includes a pinion angle calculation unit 61, a target pinion angle calculation unit 62, a pinion angle feedback controller 63, an energization controller 64, a current sensor 65, and a current limitation processing unit 66.

The pinion angle calculation unit 61 calculates a pinion angle $\theta_p$ based on the rotation angle $\theta_b$ of the turning motor 31 detected through the rotation angle sensor 43. The pinion angle $\theta_p$ is a rotation angle of the pinion shaft 21. The turning motor 31 and the pinion shaft 21 are linked via the power transmission mechanism 32, the conversion mechanism 33, and the turning shaft 22. Therefore, there is a correlation between the rotation angle $\theta_b$ of the turning motor 31 and the pinion angle $\theta_p$. The pinion angle $\theta_p$ can be obtained from the rotation angle $\theta_b$ of the turning motor 31 by using the correlation. The pinion shaft 21 meshes with the turning shaft 22. Therefore, there is also a correlation between the pinion angle $\theta_p$ and an amount of movement of the turning shaft 22. That is, the pinion angle $\theta_p$ is a value reflecting the turning angle $\theta_w$ of the turning wheels 6.

The target pinion angle calculation unit 62 calculates a target pinion angle $\theta_p^*$ based on the steering angle $\theta_s$ calculated by the steering angle calculation unit 51. The target pinion angle $\theta_p{}^*$ is a target angle of the pinion angle $\theta_p$. The target pinion angle calculation unit 62 calculates the target pinion angle $\theta_p{}^*$ such that a steering angle ratio set according to product specifications or the like is achieved. The steering angle ratio is a ratio of the turning angle $\theta_w$ to the steering angle $\theta_s$.

The target pinion angle calculation unit 62 sets the steering angle ratio according to the traveling state of the vehicle, such as the vehicle speed V, and calculates the target pinion angle $\theta_p{}^*$ according to the set steering angle ratio. The target pinion angle calculation unit 62 calculates the target pinion angle $\theta_p{}^*$ such that the turning angle $\theta_w$ with respect to the steering angle $\theta_s$ increases as the vehicle speed V decreases. The target pinion angle calculation unit 62 calculates the target pinion angle $\theta_p{}^*$ such that the turning angle $\theta_w$ with respect to the steering angle $\theta_s$ decreases as the vehicle speed V increases. In order to achieve the steering angle ratio set according to the traveling state of the vehicle, the target pinion angle calculation unit 62 calculates a correction angle with respect to the steering angle $\theta_s$, and calculates the target pinion angle $\theta_p{}^*$ corresponding to the steering angle ratio by adding the calculated correction angle to the steering angle $\theta_s$. The target pinion angle $\theta_p{}^*$ is a target rotation angle of the pinion shaft 21, and is an example of a second state variable that reflects a turning state of the turning wheels 6.

Depending on the product specifications or the like, the target pinion angle calculation unit 62 may calculate the target pinion angle $\theta_p{}^*$ such that the steering angle ratio is "1:1" regardless of the traveling state of the vehicle.

The pinion angle feedback controller 63 receives the target pinion angle $\theta_p{}^*$ calculated by the target pinion angle calculation unit 62 and the pinion angle $\theta_p$ calculated by the pinion angle calculation unit 61. The pinion angle feedback controller 63 calculates a turning torque command value $T_p{}^*$ through feedback control of the pinion angle $\theta_p$ such that the pinion angle $\theta_p$ follows the target pinion angle $\theta_p{}^*$. The turning torque command value $T_p{}^*$ is a command value for a torque generated by the turning motor 31 and is a target value of the turning force.

The energization controller 64 supplies electric power corresponding to the turning torque command value $T_p{}^*$ to the turning motor 31. Specifically, the energization controller 64 calculates a current command value for the turning motor 31 based on the turning torque command value $T_p{}^*$. The current sensor 65 is provided in a power supply path to the turning motor 31. The energization controller 64 detects a value of a current $I_b$ generated in the power supply path to the turning motor 31 through the current sensor 65. The value of the current $I_b$ is a value of a current supplied to the turning motor 31, and is an example of a second state variable that reflects the turning state of the turning wheels 6. The energization controller 64 obtains a deviation between the current command value and the value of the current $I_b$, and controls power supply to the turning motor 31 such that the deviation is eliminated. As a result, the turning motor 31 generates a torque corresponding to the turning torque command value $T_p{}^*$.

The current limitation processing unit 66 determines whether or not a specific event has occurred. The specific event is a turning operation of the turning wheels 6, that is, an event in which an output of the turning motor 31 is to be limited, and is, for example, the following first to fourth events B1 to B4.

B1. A temperature of the turning motor 31 excessively increases.

B2. A voltage input to the turning control device 1B decreases.

B3. A high load is continuously applied to the turning motor 31

B4. A drive mode of the turning motor 31 is a single system drive mode.

The current limitation processing unit 66 determines that a first event B1 has occurred when a first determination condition is satisfied. The first determination condition includes, for example, a condition that a temperature $T_m$ of the turning motor 31 detected through a temperature sensor exceeds a temperature threshold value. Note that the current limitation processing unit 66 may calculate the temperature of the turning motor 31 based on the value of the current $I_b$ of the turning motor 31 or an integrated value of the value of the current $I_b$.

The current limitation processing unit 66 determines that a second event B2 has occurred when a second determination condition is satisfied. The second determination condition includes, for example, a condition that a value of a voltage $V_b$ input to the turning control device 1B is lower than a voltage threshold value. The voltage $V_b$ is a voltage drawn from a battery equipped in the vehicle to the turning control device 1B. Note that a condition that a value of the voltage of the battery detected through a voltage sensor is lower than the voltage threshold value may be adopted. The battery is a main power source of the vehicle.

The current limitation processing unit 66 determines that a third event has occurred when a third determination condition is satisfied. The third determination condition includes, for example, a condition that a state in which the value of the current $I_b$ supplied to the turning motor 31 exceeds a current threshold value continues for a predetermined time. The third event occurs, for example, when the turning wheel 6 abuts against an obstacle, such as a curb, at the time of stationary steering, or end abutting of the turning shaft 22 has occurred. The end abutting is that the rack end 24, which is an end of the turning shaft 22, abuts against the housing 23.

The current limitation processing unit 66 determines that a fourth event B4 has occurred when a fourth determination condition is satisfied. The fourth determination condition includes, for example, in a case where the reaction force motor 12 and the turning motor 31 each have winding groups of two systems, a condition that one of two power supply systems for the turning motor 31 is determined to be abnormal, a condition that one of two control systems for the turning motor 31 is determined to be abnormal, or a condition that a drive mode of the reaction force motor 12 has transitioned from a collaborative drive mode to a single system drive mode.

In a case where the reaction force motor 12 has winding groups of two systems, the reaction force control device 1A has two power supply systems for the reaction force motor 12 and two control systems for the reaction force motor 12. The power supply system includes a motor drive circuit. The control system includes a CPU and various sensors. The reaction force control device 1A transitions the drive mode of the turning motor 31 from the collaborative drive mode to the single system drive mode in a case where an abnormality is detected in one of the two power supply systems or in one of the two control systems.

In a case where the turning motor 31 has winding groups of two systems, the turning control device 1B has two power supply systems for the turning motor 31 and two control systems for the turning motor 31. The power supply system includes a motor drive circuit. The control system includes a CPU and various sensors. The turning control device 1B transitions the drive mode of the turning motor 31 from the collaborative drive mode to the single system drive mode in a case where an abnormality is detected in one of the two power supply systems or in one of the two control systems.

The reaction force control device 1A and the turning control device 1B synchronize the drive mode of the reaction force motor 12 and the drive mode of the turning motor 31. That is, the reaction force control device 1A transitions the drive mode of the reaction force motor 12 from the collaborative drive mode to the single system drive mode when the drive mode of the turning motor 31 transitions from the collaborative drive mode to the single system drive mode. The turning control device 1B transitions the drive mode of the turning motor 31 from the collaborative drive mode to the single system drive mode when the drive mode of the reaction force motor 12 transitions from the collaborative drive mode to the single system drive mode.

The collaborative drive mode is a drive mode in a case where both the two systems are normal, and is a drive mode in which the winding groups of the two systems generate equal torques. The single system drive mode is a drive mode in a case where any one of the two systems is determined to be abnormal, and there is no possibility of recovery to a normality. In the single system mode, a torque is generated in a winding group of a system in which the abnormality is not detected.

The current limitation processing unit 66 executes current limitation processing on the turning motor 31 when determination is made that the specific event (B1 to B4) has occurred. The current limitation processing is an example of output limitation processing for limiting an output of the turning motor 31, and is processing of limiting a current supplied to the turning motor 31. Specifically, the current limitation processing unit 66 calculates a limit value $I_{lim}$ for limiting an amount of the current supplied to the turning motor 31. The limit value $I_{lim}$ is an upper limit value of the amount of the current supplied to the turning motor 31. The limit value $I_{lim}$ is, for example, a value of the current set based on a viewpoint of protecting the turning motor 31 from overheating, or a viewpoint of limiting the current of the turning motor 31 at a predetermined limitation ratio for suppressing a decrease in voltage of the battery.

When the limit value $I_{lim}$ is calculated by the current limitation processing unit 66, the energization controller 64 limits the amount of the current supplied to the turning motor 31 according to the limit value $I_{lim}$. The energization controller 64 compares an absolute value of the current to be supplied to the turning motor 31 with the limit value $I_{lim}$. When the absolute value of the current to be supplied to the turning motor 31 is larger than the limit value $I_{lim}$, the energization controller 64 limits the absolute value of the current to be supplied to the turning motor 31 to the limit value $I_{lim}$. When the absolute value of the current to be supplied to the turning motor 31 is equal to or smaller than the limit value $I_{lim}$, the energization controller 64 supplies the original current calculated through feedback control of the current $I_b$ as it is to the turning motor 31.

The current limitation processing unit 66 sets a value of a current limitation flag $F_{lim}$ according to a determination result as to whether or not the specific event has occurred. When determination is made that none of the first to fourth events B1 to B4 occurs, the current limitation processing unit 66 sets the value of the current limitation flag $F_{lim}$ to "0". When determination is made that the first event B1 has occurred, the current limitation processing unit 66 sets the value of the current limitation flag $F_{lim}$ to "1". When determination is made that the second event B2 has occurred, the current limitation processing unit 66 sets the value of the current limitation flag $F_{lim}$ to "2". When determination is made that the third event B3 has occurred, the current limitation processing unit 66 sets the value of the current limitation flag $F_{lim}$ to "3". When determination is made that the fourth event B4 has occurred, the current limitation processing unit 66 sets the value of the current limitation flag $F_{lim}$ to "4". The current limitation flag $F_{lim}$ is an electrical signal indicating whether or not the current limitation processing is executed on the turning motor 31, and is also an electrical signal including information indicating contents of the specific event.

The current limitation processing unit 66 ends the execution of the current limitation processing on the turning motor 31 when a predetermined end condition is satisfied during the execution of the current limitation processing on the turning motor 31. The end condition may be, for example, a condition that the first to fourth determination conditions described above are not satisfied, or a condition set individually for each of the first to fourth events B1 to B4. When the end condition of the current limitation processing is satisfied, the current limitation processing unit 66 stops the calculation of the limit value $I_{lim}$ and sets the value of the current limitation flag $F_{lim}$ to "0".

Configuration of Reaction Torque Command Value Calculation Unit 52

Next, a configuration of the reaction torque command value calculation unit 52 will be described in detail.

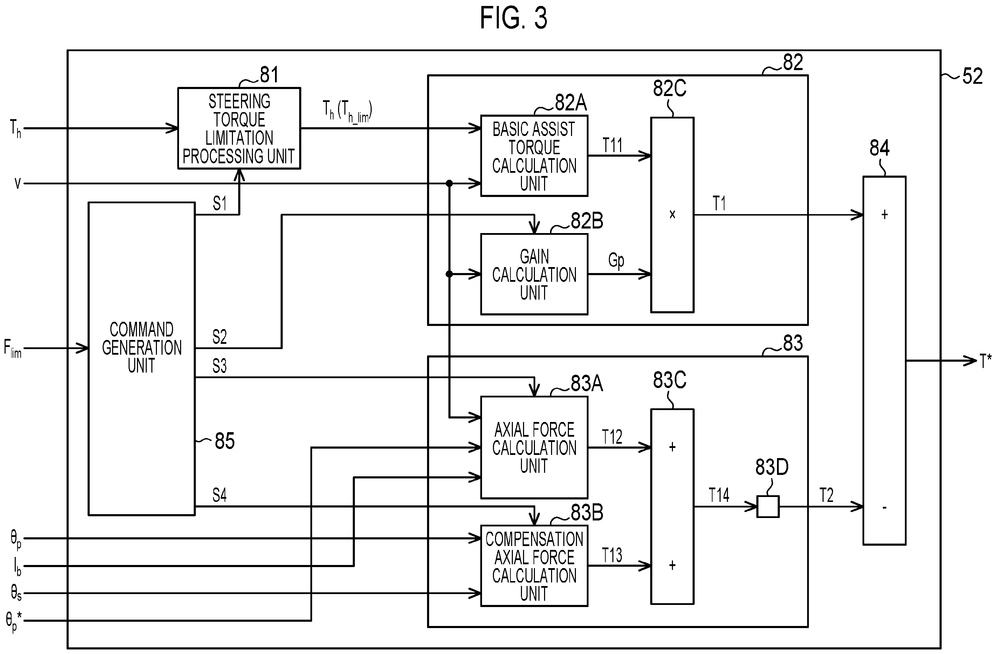

As shown in FIG. 3, the reaction torque command value calculation unit 52 includes a steering torque limitation processing unit 81, an assist torque command value calculation unit 82, an axial torque calculation unit 83, a calculator 84, and a command generation unit 85.

The steering torque limitation processing unit 81 receives a value of the steering torque $T_h$ detected through the torque sensor 42. The steering torque limitation processing unit 81 executes steering torque limitation processing based on the command from the command generation unit 85. The steering torque limitation processing is processing of limiting the value of the steering torque $T_h$ to limit the output of the turning motor 31. The steering torque limitation processing unit 81 generates a limited steering torque $T_{h\_lim}$ by limiting the value of the steering torque $T_h$ through the execution of the steering torque limitation processing. The limited steering torque $T_{h\_lim}$ is the steering torque $T_h$ after the limitation.

The assist torque command value calculation unit 82 receives the steering torque $T_h$ or the limited steering torque $T_{h\_lim}$ from the steering torque limitation processing unit 81. The assist torque command value calculation unit 82 receives the vehicle speed V detected through the vehicle speed sensor 41. The assist torque command value calculation unit 82 calculates an assist torque command value T1 based on the steering torque $T_h$ or the limited steering torque $T_{h\_lim}$, and the vehicle speed V. The assist torque command value T1 corresponds to a target value of an assist torque when the steering device 2 is an electric power steering device. The assist torque is a force for assisting steering of the steering wheel 5. The assist torque command value T1 is a torque in the same direction as the steering direction of the steering wheel 5. An absolute value of the assist torque command value T1 becomes larger as the absolute value of the steering torque $T_h$ is larger and vehicle speed V is lower.

The axial torque calculation unit 83 receives the target pinion angle $\theta_p{}^*$ calculated by the target pinion angle calculation unit 62, the value of the current $I_b$ of the turning motor 31 detected through the current sensor 65, and the vehicle speed V detected through the vehicle speed sensor 41. The axial torque calculation unit 83 calculates an axial force acting on the turning shaft 22 based on the target pinion angle $\theta_p{}^*$, the value of the current $I_b$ of the turning motor 31, and the vehicle speed V. The axial torque calculation unit 83 calculates an axial torque T2 by converting the calculated axial force into a torque with respect to the steering shaft 11.

The calculator 84 receives the assist torque command value T1 calculated by the assist torque command value calculation unit 82 and the axial torque T2 calculated by the axial torque calculation unit 83. The calculator 84 calculates the reaction torque command value T* by subtracting the axial torque T2 from the assist torque command value T1.

The command generation unit 85 receives the value of the current limitation flag $F_{lim}$ set by the current limitation processing unit 66. The command generation unit 85 generates commands to the steering torque limitation processing unit 81, the assist torque command value calculation unit 82, and the axial torque calculation unit 83 according to the value of the current limitation flag $F_{lim}$. The commands include first to fourth commands S1 to S4. The first command S1 is a command to the steering torque limitation processing unit 81. The second command S2 is a command to the assist torque command value calculation unit 82. The third command S3 and the fourth command S4 are commands to the axial torque calculation unit 83.

Configuration of Steering Torque Limitation Processing Unit 81

Next, a configuration of the steering torque limitation processing unit 81 will be described in detail.

The steering torque limitation processing unit 81 can execute first to third limitation processing for the steering torque $T_h$. The first to third limitation processing differs in limitation mode for the steering torque $T_h$. The steering torque limitation processing unit 81 executes any one of the first to third limitation processing based on the first command S1 generated by the command generation unit 85.

First Limitation Processing

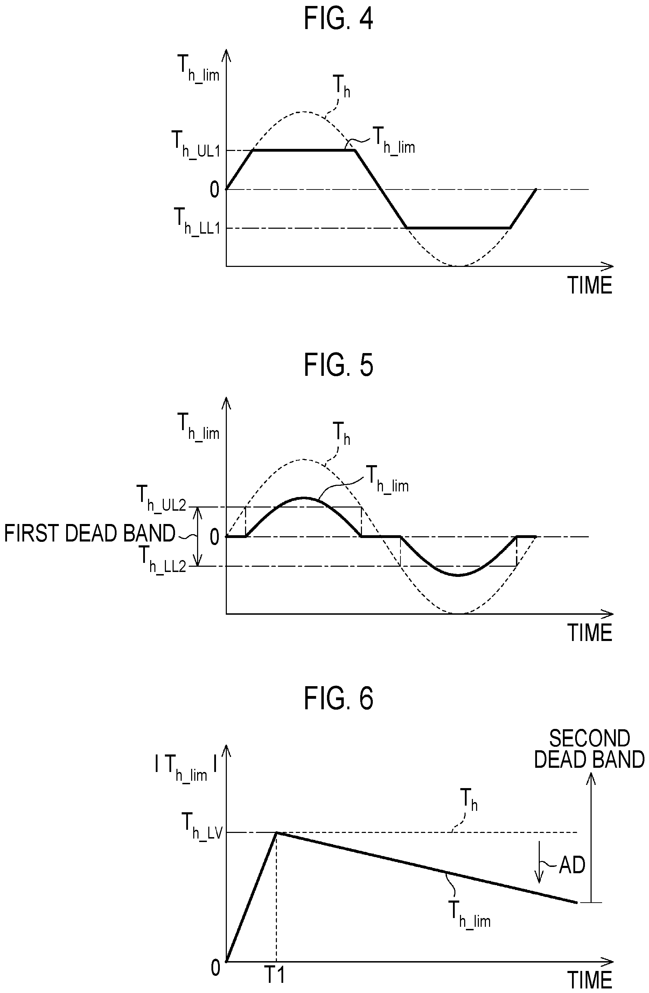

As shown in FIG. 4, the first limitation processing is processing of limiting a change range of the value of the steering torque $T_h$. The change range of the value of the steering torque $T_h$ is, for example, a range from a first upper limit value $T_{h\_UL1}$ to a first lower limit value $T_{h\_LL1}$. The first upper limit value $T_{h\_UL1}$ is a positive value, and the first lower limit value $T_{h\_LL1}$ is a negative value. The first upper limit value $T_{h\_UL1}$ and the first lower limit value $T_{h\_LL1}$ are limit values for the value of the steering torque $T_h$, and are stored in the memory. In FIG. 4, as an example, the value of the steering torque $T_h$ changes in a sinusoidal manner.

The steering torque limitation processing unit 81 compares the value of the steering torque $T_h$ with the first upper limit value $T_{h\_UL1}$ when the value of the steering torque $T_h$ is a positive value. The steering torque limitation processing unit 81 limits the value of the steering torque $T_h$ to the first upper limit value $T_{h\_UL1}$ when the value of the steering torque $T_h$ exceeds the first upper limit value $T_{h\_UL1}$. The steering torque $T_h$ after being limited to the first upper limit value $T_{h\_UL1}$ is the limited steering torque $T_{h\_lim}$.

The steering torque limitation processing unit 81 compares the value of the steering torque $T_h$ with the first lower limit value $T_{h\_LL1}$ when the value of the steering torque $T_h$ is a negative value. When the value of the steering torque $T_h$ is lower than the first lower limit value $T_{h\_LL1}$, the steering torque limitation processing unit 81 limits the value of the steering torque $T_h$ to the first lower limit value $T_{h\_LL1}$. The steering torque $T_h$ after being limited to the first lower limit value $T_{h\_LL1}$ is the limited steering torque $T_{h\_lim}$.

When the value of the steering torque $T_h$ is within a range from the first upper limit value $T_{h\_UL1}$ to the first lower limit value $T_{h\_LL1}$, the steering torque limitation processing unit 81 sets the value of the steering torque $T_h$ detected through the torque sensor 42 as it is as the value of the limited steering torque $T_{h\_lim}$.

The assist torque command value calculation unit 82 calculates the assist torque command value T1 by using the limited steering torque $T_{h\_lim}$ obtained through the first limitation processing. Note that the absolute value of the assist torque command value T1 is smaller than the assist torque command value T1 calculated using the steering torque $T_h$ by an amount by which the value of the steering torque $T_h$ is limited. As the absolute value of the assist torque command value T1 becomes smaller, the reaction torque command value T* calculated by the calculator 84 and thus the steering reaction force become larger.

In a case where the first limitation processing is executed, when the steering wheel 5 is steered beyond a small steering angle region, the steering reaction force becomes larger than the original steering reaction force corresponding to the steering torque $T_h$. Therefore, as responsive feeling through the steering wheel 5, it is possible to give the driver of the vehicle a steering feel that the steering wheel 5 is heavy. In a case where the steering device 2 is an electric power steering device that applies an assist force to the steering wheel 5, a weight of the steering wheel 5 is the same as a weight of the steering wheel 5 when the assist force is not applied to the steering wheel 5.

Second Limitation Processing

As shown in FIG. 5, the second limitation processing is processing of setting a first dead band for the steering torque $T_h$ and limiting the value of the steering torque $T_h$ to "0" when the value of the steering torque $T_h$ reaches a value within the first dead band. The first dead band is a certain range of the value of the steering torque $T_h$ including "0". The first dead band is a range from a second upper limit value $T_{h\_UL2}$ to a second lower limit value $T_{h\_LL2}$. The second upper limit value $T_{h\_UL2}$ is a positive value, and the second lower limit value $T_{h\_LL2}$ is a negative value. The second upper limit value $T_{h\_UL2}$ and the second lower limit value $T_{h\_LL2}$ are limit values for the value of the steering torque $T_h$, and are stored in the memory. In FIG. 5, as an example, the value of the steering torque $T_h$ changes in a sinusoidal manner.

When the value of the steering torque $T_h$ that is an input is a positive value, the steering torque limitation processing unit 81 sets the value of the limited steering torque $T_{h\_lim}$ that is an output to "0" until the value of the steering torque $T_h$ exceeds the second upper limit value $T_{h\_UL2}$. The steering torque limitation processing unit 81 sets the value of the limited steering torque $T_{h\_lim}$ according to the value of the steering torque $T_h$ after the value of the steering torque $T_h$ exceeds the second upper limit value $T_{h\_UL2}$. Note that, due to an influence of the first dead band, the value of the limited steering torque $T_{h\_lim}$ does not follow the value of the original steering torque $T_h$ that changes in a sinusoidal manner. The value of the limited steering torque $T_{h\_lim}$ is smaller than the value of the original steering torque $T_h$.

When the value of the steering torque $T_h$ that is an input is a negative value, the steering torque limitation processing unit 81 sets the value of the limited steering torque $T_{h\_lim}$ that is an output to "0" until the value of the steering torque $T_h$ falls below the second lower limit value $T_{h\_LL2}$. The steering torque limitation processing unit 81 sets the value of the limited steering torque $T_{h\_lim}$ according to the value of the steering torque $T_h$ after the value of the steering torque $T_h$ falls below the second lower limit value $T_{h\_LL2}$. Note that, due to an influence of the first dead band, the value of the limited steering torque $T_{h\_lim}$ does not follow the value of the original steering torque $T_h$ that changes in a sinusoidal manner. The value of the limited steering torque $T_{h\_lim}$ is smaller than the value of the original steering torque $T_h$.

When the second limitation processing is executed, the steering reaction force suddenly increases or decreases with the steering of the steering wheel 5. Therefore, the driver of the vehicle can be given a steering feel with a sense of hooking as responsive feeling through the steering wheel 5.

Third Limitation Processing

As shown in FIG. 6, the third limitation processing is processing of setting a second dead band defined by a limit value $T_{h\_LV}$ with respect to the absolute value of the steering torque $T_h$, and gradually decreasing the limit value $T_{h\_LV}$ after the absolute value of the steering torque $T_h$ reaches a value within the second dead band to gradually increase the second dead band, thereby limiting the absolute value of the steering torque $T_h$ to the limit value $T_{h\_LV}$. The limit value $T_{h\_LV}$ is a value greater than "0" and is a boundary value of the second dead band. That is, the second dead band is a range of the absolute value of the steering torque $T_h$ equal to or greater than the limit value $T_{h\_LV}$. The limit value $T_{h\_LV}$ is set to, for example, the same value as the absolute value of the steering torque $T_h$ when the end abutting occurs. The limit value $T_{h\_LV}$ is stored in the memory.

For example, in a case where the end abutting occurs and an end abutting state is continued, the absolute value of the steering torque $T_h$ changes as follows. That is, the absolute value of the steering torque $T_h$ gradually increases with the steering of the steering wheel 5 and eventually reaches a predetermined value (time T1). The predetermined value is equal to the limit value $T_{h\_LV}$. When the end abutting is continued, the absolute value of the steering torque $T_h$ is maintained at the predetermined value.

The steering torque limitation processing unit 81 sets the absolute value of the steering torque $T_h$ as the absolute value of the limited steering torque $T_{h\_lim}$ until the absolute value of the steering torque $T_h$ reaches the limit value $T_{h\_LV}$. The steering torque limitation processing unit 81 gradually expands a range of the dead band after the absolute value of the steering torque $T_h$ reaches the limit value $T_{h\_LV}$. That is, as shown by an arrow AD in FIG. 6, the steering torque limitation processing unit 81 gradually decreases the limit value $T_{h\_LV}$.

The steering torque limitation processing unit 81 compares the absolute value of the steering torque $T_h$ with the limit value $T_{h\_LV}$. The steering torque limitation processing unit 81 limits the absolute value of the steering torque $T_h$ to the limit value $T_{h\_LV}$ when the absolute value of the steering torque $T_h$ exceeds the limit value $T_{h\_LV}$. The absolute value of the steering torque $T_h$ after being limited to the limit value $T_{h\_LV}$ is the absolute value of the limited steering torque $T_{h\_lim}$. Since the limit value $T_{h\_LV}$ gradually decreases, the absolute value of the steering torque $T_h$ and thus the absolute value of the limited steering torque $T_{h\_lim}$ gradually decrease.

When the third limitation processing is executed, the steering reaction force gradually increases with the steering of the steering wheel 5. Therefore, as responsive feeling through the steering wheel 5, the driver of the vehicle can be given a steering feel that the steering wheel 5 is gradually pushed back or a steering feel with a sense of hitting an end.

Configuration of Assist Torque Command Value Calculation Unit 82

Next, a configuration of the assist torque command value calculation unit 82 will be described in detail.

As shown in FIG. 3, the assist torque command value calculation unit 82 includes a basic assist torque calculation unit 82A, a gain calculation unit 82B, and a multiplier 82C. The basic assist torque calculation unit 82A calculates a basic assist torque T11 based on the steering torque $T_h$ or the limited steering torque $T_{h\_lim}$, and the vehicle speed V. The basic assist torque T11 is a basis for calculating the assist torque command value T1, and is a torque in the same direction as the steering direction of the steering wheel 5. An absolute value of the basic assist torque T11 becomes larger as the absolute value of the steering torque $T_h$ becomes larger and the vehicle speed V becomes lower. The gain calculation unit 82B calculates a gain $G_p$ according to the vehicle speed V. The gain calculation unit 82B calculates the gain $G_p$ by using a first map M1 described below. The multiplier 82C multiplies the basic assist torque T11 by the gain $G_p$ to calculate the assist torque command value T1.

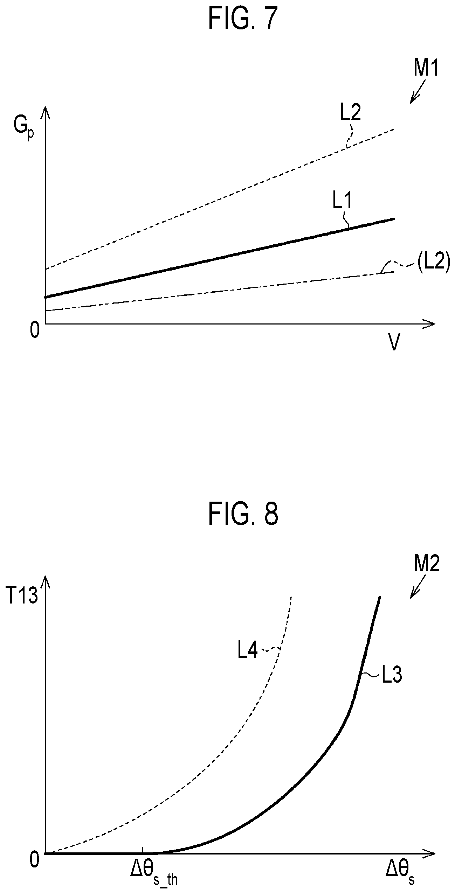

As shown in FIG. 7, the first map M1 is a two-dimensional map that defines a relationship between the vehicle speed V and the gain $G_p$. The first map M1 has a first characteristic indicated by a first characteristic line L1 and a second characteristic indicated by a second characteristic line L2. The first characteristic is a characteristic used when the current limitation processing by the current limitation processing unit 66 is not executed. The second characteristic is a characteristic used when the current limitation processing by the current limitation processing unit 66 is executed.

In the first characteristic, as the vehicle speed V increases, a value of the gain $G_p$ gradually increases linearly. Also in the second characteristic, as in the first characteristic, the value of the gain $G_p$ gradually increases linearly as the vehicle speed V increases. Note that the value of the gain $G_p$ with respect to the vehicle speed V of the second characteristic is larger than the value of the gain $G_p$ with respect to the vehicle speed V of the first characteristic. A slope which is a ratio of change in the gain $G_p$ with respect to the vehicle speed V of the second characteristic is slightly larger than a slope which is a ratio of change in the gain $G_p$ with respect to the vehicle speed V of the first characteristic.

The second characteristic indicated by the second characteristic line L2 is appropriately set according to product specifications and the like. The second characteristic may be set as follows, for example. That is, the value of the gain $G_p$ with respect to the vehicle speed V of the second characteristic is smaller than the value of the gain $G_p$ with respect to the vehicle speed V of the first characteristic. The slope which is a ratio of change in the gain $G_p$ with respect to the vehicle speed V of the second characteristic is slightly smaller than the slope which is a ratio of change in the gain $G_p$ with respect to the vehicle speed V of the first characteristic.

The gain calculation unit 82B switches a characteristic of the first map M1 between the first characteristic and the second characteristic based on the second command S2 generated by the command generation unit 85.

Configuration of Axial Torque Calculation Unit 83

Next, a configuration of the axial torque calculation unit 83 will be described in detail.

As shown in FIG. 3, the axial torque calculation unit 83 includes an axial force calculation unit 83A, a compensation axial force calculation unit 83B, an adder 83C, and a converter 83D. The axial force calculation unit 83A calculates an angle axial force. The angle axial force is, for example, an ideal axial force corresponding to the target pinion angle $\theta_p{}^*$. The axial force calculation unit 83A calculates the angle axial force based on the target pinion angle $\theta_p{}^*$. An absolute value of the angle axial force may increase as an absolute value of the target pinion angle $\theta_p{}^*$ increases and as the vehicle speed V decreases. The absolute value of the angle axial force linearly increases with an increase in the absolute value of the target pinion angle $\theta_p{}^*$. The angle axial force has the same sign as a sign of the target pinion angle $\theta_p{}^*$. The angle axial force is an axial force in which a road surface condition or a force acting on the turning shaft 22 via the turning wheels 6 is not reflected. The axial force calculation unit 83A may receive the pinion angle $\theta_p$ or the steering angle $\theta_s$ instead of the target pinion angle $\theta_p{}^*$.

The axial force calculation unit 83A calculates a current axial force. The current axial force is an axial force corresponding to the value of the current $I_b$ of the turning motor 31. The axial force calculation unit 83A calculates the current axial force based on the value of the current $I_b$ of the turning motor 31. The value of the current $I_b$ of the turning motor 31 changes according to a difference between the target pinion angle $\theta_p{}^*$ and an actual pinion angle $\theta_p$ depending on a disturbance due to a road surface condition, such as a road surface friction resistance acting on the turning wheels 6. That is, the value of the current $I_b$ of the turning motor 31 reflects an actual road surface condition acting on the turning wheels 6. Therefore, it is possible to calculate the axial force reflecting an influence of the road surface condition based on the value of the current $I_b$ of the turning motor 31. The axial force calculation unit 83A calculates the current axial force by, for example, multiplying the value of the current $I_b$ of the turning motor 31 by a gain that is a coefficient corresponding to the vehicle speed V.

The axial force calculation unit 83A calculates a mixed axial force T12. The mixed axial force T12 is an axial force in which the angle axial force and the current axial force are mixed at a predetermined ratio. The axial force calculation unit 83A individually sets a distribution ratio of the angle axial force and the current axial force according to various state variables in which a vehicle behavior, a road surface condition, or a steering state is reflected. The axial force calculation unit 83A calculates the mixed axial force T12 by adding values obtained by multiplying the angle axial force and the current axial force by distribution ratios set individually.

Note that the axial force calculation unit 83A switches an axial force used for calculating the axial torque T2 from the mixed axial force T12 to the angle axial force based on the third command S3 generated by the command generation unit 85. For example, the axial force calculation unit 83A sets the distribution ratio of the current axial force to "0%" and sets the distribution ratio of the angle axial force to "100%". As a result, solely the angle axial force is used for calculating the axial torque T2.

The compensation axial force calculation unit 83B calculates a deviation compensation axial force T13. The deviation compensation axial force T13 is an axial force corresponding to a value of a difference between the steering angle $\theta_s$ of the steering wheel 5 and the turning angle $\theta_w$ of the turning wheels 6. The compensation axial force calculation unit 83B calculates the turning angle $\theta_w$ of the turning wheel 6 based on the pinion angle $\theta_p$ calculated by the pinion angle calculation unit 61, and converts the turning angle $\theta_w$ of the turning wheels 6 into the steering angle $\theta_s$ of the steering wheel 5 by multiplying the calculated turning angle $\theta_w$ by a reciprocal of the steering angle ratio. The compensation axial force calculation unit 83B calculates an angle deviation $\Delta\theta_s$ that is a difference between the converted steering angle $\theta_s$ and the steering angle $\theta_s$ calculated by the steering angle calculation unit 51, and calculates the deviation compensation axial force T13 according to the calculated angle deviation $\Delta\theta_s$. The compensation axial force calculation unit 83B calculates the deviation compensation axial force T13 using, for example, a second map M2 described below.

The adder 83C receives the mixed axial force T12 calculated by the axial force calculation unit 83A and the deviation compensation axial force T13 calculated by the compensation axial force calculation unit 83B. The adder 83C calculates a final axial force T14 by adding the mixed axial force T12 and the deviation compensation axial force T13. The final axial force T14 is a final axial force used to calculate the axial torque T2.

The converter 83D receives the final axial force T14 calculated by the adder 83C. The converter 83D calculates the axial torque T2 by converting the final axial force T14 into the torque with respect to the steering shaft 11.

As shown in FIG. 8, the second map M2 is a two-dimensional map that defines a relationship between the angle deviation $\Delta\theta_s$ and the deviation compensation axial force T13. The second map M2 has a third characteristic indicated by a third characteristic line L3 and a fourth characteristic indicated by a fourth characteristic line L4. The third characteristic is a characteristic used when the current limitation processing by the current limitation processing unit 66 is not executed. The fourth characteristic is a characteristic used when the current limitation processing by the current limitation processing unit 66 is executed.

In the third characteristic, a value of the deviation compensation axial force T13 is maintained at "0" until a value of the angle deviation $\Delta\theta_s$ reaches an angle deviation threshold value $\Delta\theta_{s\_th}$. That is, a dead band is set with respect to the angle deviation $\Delta\theta_s$. The dead band is a range of the value of the angle deviation $\Delta\theta_s$ that is equal to or greater than "0" and equal to or smaller than the angle deviation threshold value $\Delta\theta_{s\_th}$. After the value of the angle deviation $\Delta\theta_s$ reaches the angle deviation threshold value $\Delta\theta_{s\_th}$, as the value of the angle deviation

$\Delta\theta_s$ increases, the value of the deviation compensation axial force T13 gradually increases. Note that, as the value of the angle deviation $\Delta\theta_s$ increases, a slope which is a ratio of change in the value of the deviation compensation axial force T13 with respect to the angle deviation $\Delta\theta_s$ gradually increases.

In the fourth characteristic, the value of the deviation compensation axial force T13 gradually increases as the value of the angle deviation $\Delta\theta_s$ increases with "0" as a starting point. That is, in the fourth characteristic, a dead band is not set with respect to the angle deviation $\Delta\theta_s$. The slope which is a ratio of change in the value of the deviation compensation axial force T13 with respect to the angle deviation $\Delta\theta_s$ gradually increases as the value of the angle deviation $\Delta\theta_s$ increases. The value of the deviation compensation axial force T13 with respect to the angle deviation $\Delta\theta_s$ of the fourth characteristic is larger than the value of the deviation compensation axial force T13 with respect to the angle deviation $\Delta\theta_s$ of the third characteristic.

The compensation axial force calculation unit 83B switches a characteristic of the second map M2 between the third characteristic and the fourth characteristic based on the fourth command S4 generated by the command generation unit 85.

Operation of Present Embodiment

Next, an operation of the present embodiment will be described.

$$ F_{lim} = 0 $$

When a value of the current limitation flag $F_{lim}$ is "0", that is, when the current of the turning motor 31 is not limited, the command generation unit 85 generates the following first to fourth commands S1 to S4.

The first command S1 is a command to instruct the steering torque limitation processing unit 81 not to execute the steering torque limitation processing.

The second command S2 is a command to instruct the gain calculation unit 82B to use the first characteristic of the first map M1 shown in FIG. 7.

The third command S3 is a command to instruct the axial force calculation unit 83A to use the mixed axial force T12 in which the current axial force and the angle axial force are mixed for calculating the axial torque T2.

The fourth command S4 is a command to instruct the compensation axial force calculation unit 83B to use the third characteristic of the second map M2 shown in FIG. 8.

The steering torque limitation processing unit 81 does not execute the steering torque limitation processing. That is, the steering torque $T_h$ detected through the torque sensor 42 is used as it is for controlling the reaction force motor 12. The gain calculation unit 82B calculates the gain $G_p$ based on the first characteristic of the first map M1. The axial force calculation unit 83A generates the mixed axial force T12 in which the current axial force and the angle axial force are mixed. The compensation axial force calculation unit 83B calculates the deviation compensation axial force T13 based on the third characteristic of the second map M2. As a result, normal reaction force control in a case where the current of the turning motor 31 is not limited is performed.

$$ F_{lim} = 1 $$

In a case where the value of the current limitation flag $F_{lim}$ is "1", that is, in a case where the first event B1 in which the temperature of the turning motor 31 excessively increases has occurred, the command generation unit 85 generates the following first to fourth commands S1 to S4.

The first command S1 is a command to instruct the steering torque limitation processing unit 81 to execute the first limitation processing shown in FIG. 4.

The second command S2 is a command to instruct the gain calculation unit 82B to use the second characteristic of the first map M1.

The third command S3 is a command to instruct the axial force calculation unit 83A to use solely the angle axial force.

The fourth command S4 is a command to instruct the compensation axial force calculation unit 83B to use the fourth characteristic of the second map M2 shown in FIG. 8.

The steering torque limitation processing unit 81 executes the first limitation processing. The value of the steering torque $T_h$ is limited through the execution of the first limitation processing. In a case where the first limitation processing is executed, when the steering wheel 5 is steered beyond a small steering angle region, the steering reaction force becomes larger than the original steering reaction force corresponding to the steering torque $T_h$. Therefore, as responsive feeling through the steering wheel 5, for example, the driver of the vehicle can be given the same steering feel as when the assist force is not applied to the steering wheel 5 in a case where the steering device 2 is the electric power steering device. The driver of the vehicle can recognize that the first event B1 has occurred by feeling the steering reaction force through the steering wheel 5 as responsive feeling.

The axial torque calculation unit 83 calculates the axial torque T2 by using the angle axial force calculated by the axial force calculation unit 83A and the deviation compensation axial force T13 calculated by the compensation axial force calculation unit 83B. Since the current $I_b$ supplied to the turning motor 31 is limited by the occurrence of the first event B1, it is difficult to use the mixed axial force T12 in which the current axial force and the angle axial force are mixed. Therefore, the axial force used for calculating the axial torque T2 is switched from the mixed axial force T12 to solely the angle axial force. As a result, a more appropriate steering reaction force is applied to the steering wheel 5.

The compensation axial force calculation unit 83B calculates the deviation compensation axial force T13 based on the fourth characteristic of the second map M2. The value of the deviation compensation axial force T13 with respect to the angle deviation $\Delta\theta_s$ of the fourth characteristic is larger than the value of the deviation compensation axial force T13 with respect to the angle deviation $\Delta\theta_s$ of the third characteristic. When the value of the deviation compensation axial force T13 increases, a value of the axial torque T2 also increases. Therefore, a decrease in turning follow-up capability of the turning wheels 6 with respect to the steering of the steering wheel 5 can be reflected in the steering reaction force. The decrease in turning follow-up capability is caused by the limitation of the current $I_b$ of the turning motor 31.

The gain calculation unit 82B calculates the gain $G_p$ based on the second characteristic of the first map M1. The assist torque command value T1 is calculated by using the gain $G_p$ calculated based on the second characteristic of the first map M1. As a result, a fluctuation of the steering reaction force due to a difference in axial force that occurs before and after the axial force used for calculating the axial torque T2 is switched from the mixed axial force T12 to solely the angle axial force is suppressed. The reason is as follows.

A value of the angle axial force immediately after the axial force used for calculating the axial torque T2 is switched from the mixed axial force T12 to solely the angle axial force may fluctuate with respect to a value of the mixed axial force T12 immediately before the axial force used for calculating the axial torque T2 is switched from the mixed axial force T12 to solely the angle axial force. Therefore, the value of the axial torque T2 fluctuates, and the reaction torque command value T* and thus the steering reaction force also fluctuate.

Therefore, in a case where the axial force used for calculating the axial torque T2 is switched from the mixed axial force T12 to solely the angle axial force, the gain calculation unit 82B calculates the gain $G_p$ based on the second characteristic of the first map M1. The second characteristic is set from a viewpoint of adapting the assist torque command value T1 to a normal state in which the output of the turning motor 31 is not limited. That is, the second characteristic is set from a viewpoint of suppressing the fluctuation of the steering reaction force due to the difference in axial force that occurs before and after the axial force used for calculating the axial torque T2 is switched from the mixed axial force T12 to solely the angle axial force.

Therefore, the assist torque command value T1 is adapted to a normal state in which the output of the turning motor 31 is not limited by using the gain $G_p$ of the second characteristic for calculating the assist torque command value T1. Therefore, the fluctuation of the steering reaction force due to the difference in axial force that occurs before and after the axial force used for calculating the axial torque T2 is switched from the mixed axial force T12 to solely the angle axial force is suppressed. That is, a more appropriate steering reaction force is applied to the steering wheel 5. Before and after the axial force used for calculating the axial torque T2 is switched from the mixed axial force T12 to solely the angle axial force is also before and after the current limitation processing unit 66 starts to execute the current limitation processing.

Switching the characteristic of the first map M1 from the first characteristic to the second characteristic is to adjust the value of the gain $G_p$ such that the assist torque command value T1 is adapted to a normal state in which the output of the turning motor 31 is not limited. Further, switching the characteristic of the first map M1 from the first characteristic to the second characteristic and calculating the assist torque command value T1 by using the gain $G_p$ of the switched second characteristic is to adjust the assist torque command value T1 to be adapted to the normal state in which the output of the turning motor 31 is not limited.

$$F_{\lim} = 2$$

When the value of the current limitation flag $F_{\lim}$ is "2", that is, when the second event B2 in which the voltage $V_b$ input to the turning control device 1B decreases has occurred, the command generation unit 85 generates the following first to fourth commands S1 to S4.

The first command S1 is a command to instruct the steering torque limitation processing unit 81 to execute the second limitation processing shown in FIG. 5.

The second command S2 is a command to instruct the gain calculation unit 82B to use the second characteristic of the first map M1.

The third command S3 is a command to instruct the axial force calculation unit 83A to use solely the angle axial force.

The fourth command S4 is a command to instruct the compensation axial force calculation unit 83B to use the fourth characteristic of the second map M2 shown in FIG. 8.

The steering torque limitation processing unit 81 executes the second limitation processing. The value of the steering torque $T_h$ is limited through the execution of the second limitation processing. When the second limitation processing is executed, the steering reaction force suddenly increases or decreases with the steering of the steering wheel 5. Therefore, the driver of the vehicle can be given a steering feel with a sense of hooking as responsive feeling through the steering wheel 5. The driver of the vehicle can recognize that the second event B2 has occurred by feeling the steering reaction force through the steering wheel 5 as responsive feeling.

Since the current $I_b$ supplied to the turning motor 31 is limited by the occurrence of the second event B2, it is difficult to use the mixed axial force T12 in which the current axial force and the angle axial force are mixed. Therefore, the axial force calculation unit 83A switches the axial force used for calculating the axial torque T2 from the mixed axial force T12 to solely the angle axial force in the same manner as in a case where the value of the current limitation flag $F_{lim}$ is "1". As a result, a more appropriate steering reaction force is applied to the steering wheel 5.

Due to the limitation of the current $I_b$ of the turning motor 31, the turning follow-up capability of the turning wheels 6 with respect to the steering of the steering wheel 5 decreases. Therefore, the compensation axial force calculation unit 83B calculates the deviation compensation axial force T13 based on the fourth characteristic of the second map M2 in the same manner as in a case where the value of the current limitation flag $F_{lim}$ is "1". Thus, a decrease in turning follow-up capability of the turning wheels 6 with respect to the steering of the steering wheel 5 can be reflected in the steering reaction force.

The gain calculation unit 82B calculates the gain $G_p$ based on the second characteristic of the first map M1 in the same manner as in a case where the value of the current limitation flag $F_{lim}$ is "1". The assist torque command value T1 is calculated by using the gain $G_p$ calculated based on the second characteristic of the first map M1. As a result, a fluctuation of the steering reaction force due to a difference in axial force that occurs before and after the axial force used for calculating the axial torque T2 is switched from the mixed axial force T12 to solely the angle axial force is suppressed.

$$F_{lim} = 3$$

When the value of the current limitation flag $F_{lim}$ is "3", that is, when the third event B3 in which a high load is continuously applied to the turning motor 31 has occurred, the command generation unit 85 generates the following first to fourth commands S1 to S4.

The first command S1 is a command to instruct the steering torque limitation processing unit 81 to execute the third limitation processing shown in FIG. 6.

The second command S2 is a command to instruct the gain calculation unit 82B to use the second characteristic of the first map M1.

The third command S3 is a command to instruct the axial force calculation unit 83A to use solely the angle axial force.

The fourth command S4 is a command to instruct the compensation axial force calculation unit 83B to use the fourth characteristic of the second map M2 shown in FIG. 8.

The steering torque limitation processing unit 81 executes the third limitation processing. When the third limitation processing is executed, the steering reaction force gradually increases with the steering of the steering wheel 5. Therefore, as responsive feeling through the steering wheel 5, the driver of the vehicle can be given a steering feel that the steering wheel 5 is gradually pushed back or a steering feel with a sense of hitting an end. The driver of the vehicle can recognize that the third event B3 has occurred by feeling the steering reaction force through the steering wheel 5 as responsive feeling.

Since the current $I_b$ supplied to the turning motor 31 is limited by the occurrence of the third event B3, it is difficult to use the mixed axial force T12 in which the current axial force and the angle axial force are mixed. Therefore, the axial force calculation unit 83A switches the axial force used for calculating the axial torque T2 from the mixed axial force T12 to solely the angle axial force in the same manner as in a case where the value of the current limitation flag $F_{lim}$ is "1". As a result, a more appropriate steering reaction force is applied to the steering wheel 5.

Due to the limitation of the current $I_b$ of the turning motor 31, the turning follow-up capability of the turning wheels 6 with respect to the steering of the steering wheel 5 decreases. Therefore, the compensation axial force calculation unit 83B calculates the deviation compensation axial force T13 based on the fourth characteristic of the second map M2 in the same manner as in a case where the value of the current limitation flag $F_{lim}$ is "1". Thus, a decrease in turning follow-up capability of the turning wheels 6 with respect to the steering of the steering wheel 5 can be reflected in the steering reaction force.

The gain calculation unit 82B calculates the gain $G_p$ based on the second characteristic of the first map M1 in the same manner as in a case where the value of the current limitation flag $F_{lim}$ is "1". The assist torque command value T1 is calculated by using the gain $G_p$ calculated based on the second characteristic of the first map M1. As a result, a fluctuation of the steering reaction force due to a difference in axial force that occurs before and after the axial force used for calculating the axial torque T2 is switched from the mixed axial force T12 to solely the angle axial force is suppressed.

$$F_{lim} = 4$$

When the value of the current limitation flag $F_{lim}$ is "4", that is, when the fourth event B4 in which it is difficult to supply power to any one of the winding groups of two systems has occurred, the command generation unit 85 generates the first to fourth commands S1 to S4 in the same manner as in a case where the value of the current limitation flag $F_{lim}$ is "1".

The first command S1 is a command to instruct the steering torque limitation processing unit 81 to execute the first limitation processing shown in FIG. 4.

The second command S2 is a command to instruct the gain calculation unit 82B to use the second characteristic of the first map M1.

The third command S3 is a command to instruct the axial force calculation unit 83A to use solely the angle axial force.

The fourth command S4 is a command to instruct the compensation axial force calculation unit 83B to use the fourth characteristic of the second map M2 shown in FIG. 8.

The steering torque limitation processing unit 81 executes the first limitation processing. The value of the steering torque $T_h$ is limited through the execution of the first limitation processing. In a case where the first limitation processing is executed, when the steering wheel 5 is steered beyond a small steering angle region, the steering reaction force becomes larger than the original steering reaction force corresponding to the steering torque $T_h$. Therefore, as responsive feeling through the steering wheel 5, for example, the driver of the vehicle can be given the same steering feel as when the assist force is not applied to the steering wheel 5 in a case where the steering device 2 is the electric power steering device. The driver of the vehicle can recognize that the fourth event B4 has occurred by feeling the steering reaction force through the steering wheel 5 as responsive feeling.

Since the current $I_b$ supplied to the turning motor 31 is limited by the occurrence of the fourth event B4, it is difficult to use the mixed axial force T12 in which the current axial force and the angle axial force are mixed. Therefore, the axial force calculation unit 83A switches the axial force used for calculating the axial torque T2 from the mixed axial force T12 to solely the angle axial force in the same manner as in a case where the value of the current limitation flag $F_{lim}$ is "1". As a result, a more appropriate steering reaction force is applied to the steering wheel 5.

Due to the limitation of the current $I_b$ of the turning motor 31, the turning follow-up capability of the turning wheels 6 with respect to the steering of the steering wheel 5 decreases. Therefore, the compensation axial force calculation unit 83B calculates the deviation compensation axial force T13 based on the fourth characteristic of the second map M2 in the same manner as in a case where the value of the current limitation flag $F_{lim}$ is "1". Thus, a decrease in turning follow-up capability of the turning wheels 6 with respect to the steering of the steering wheel 5 can be reflected in the steering reaction force.

The gain calculation unit 82B calculates the gain $G_p$ based on the second characteristic of the first map M1 in the same manner as in a case where the value of the current limitation flag $F_{lim}$ is "1". The assist torque command value T1 is calculated by using the gain $G_p$ calculated based on the second characteristic of the first map M1. As a result, a fluctuation of the steering reaction force due to a difference in axial force that occurs before and after the axial force used for calculating the axial torque T2 is switched from the mixed axial force T12 to solely the angle axial force is suppressed.

Effect of Present Embodiment

The present embodiment has the following effects.

(1) The steering control device 1 includes the reaction force control device 1A that controls the reaction force motor 12 that generates a steering reaction force applied to the steering wheel 5, and the turning control device 1B that controls the turning motor 31 that generates a turning force for turning the turning wheels 6. The reaction force control device 1A executes reaction force change processing of, in a case where an event in which the output of the turning motor 31 is limited has occurred, changing the steering reaction force according to contents of the event.

The reaction force change processing includes the first to third limitation processing, and the processing of switching the characteristic of the first map M1 from the first characteristic to the second characteristic. The reaction force change processing includes the processing of switching the axial force used for calculating the axial torque T2 from the mixed axial force to the angle axial force, and processing of switching the characteristic of the second map M2 from the third characteristic to the fourth characteristic.

With this configuration, in a case where the event in which the output of the turning motor 31 is limited has occurred, the steering reaction force is changed according to the contents of the event. Therefore, as responsive feeling through the steering wheel 5, it is possible to give the driver of the vehicle a different steering feel according to the contents of the event in which the output of the turning motor 31 is limited. Therefore, the driver of the vehicle can recognize that the output of the turning motor 31 is limited, and thus the contents of the event in which the output of the turning motor 31 is limited by feeling the steering reaction force through the steering wheel 5 as responsive feeling. Therefore, the driver of the vehicle can be appropriately notified that the output of the turning motor 31 is limited. The driver of the vehicle can continue steering the steering wheel 5 in consideration of the contents of the event in which the output of the turning motor 31 is limited.

(2) The reaction force control device 1A executes processing of calculating the assist torque command value T1, processing of calculating the axial torque T2, and processing of calculating the reaction torque command value T* by subtracting the axial torque T2 from the assist torque command value T1. In this case, the reaction force change processing may include processing of changing the assist torque command value T1 and processing of changing the axial torque T2.

The processing of changing the assist torque command value T1 includes the first to third limitation processing and processing of switching the characteristic of the first map M1 from the first characteristic to the second characteristic. The processing of changing the axial torque T2 includes processing of switching the axial force used for calculating the axial torque T2 from the mixed axial force to the angle axial force, and processing of switching the characteristic of the second map M2 from the third characteristic to the fourth characteristic.

With this configuration, in a case where the event in which the output of the turning motor 31 is limited has occurred, the reaction force control device 1A can change the steering reaction force according to the contents of the event in which the output of the turning motor 31 is limited by changing the assist torque command value T1 and the axial torque T2.

(3) In a case where the event in which the output of the turning motor 31 is limited has occurred, the reaction force control device 1A changes the assist torque command value T1 by, for example, limiting the steering torque $T_h$ detected by the torque sensor 42 according to the contents of the event. With this configuration, in a case where the event in which the output of the turning motor 31 is limited has occurred, the assist torque command value T1 can be changed according to the contents of the event by limiting the steering torque $T_h$ detected by the torque sensor 42 according to the contents of the event.

(4) The axial force used for calculating the axial torque T2 includes the mixed axial force T12 in which the current axial force corresponding to the value of the current $I_b$ of the turning motor 31 and the angle axial force corresponding to the target pinion angle $\theta_p{}^*$ that is the target rotation angle of the pinion shaft 21 are mixed. In a case where the event in which the output of the turning motor 31 is limited has occurred, the reaction force control device 1A switches the axial force used for calculating the axial torque T2 from the mixed axial force T12 to the angle axial force.

With this configuration, in a case where the event in which the output of the turning motor 31 is limited has occurred, the axial force used for calculating the axial torque T2 is switched from the mixed axial force T12 to the angle axial force. Since the angle axial force is not affected by the current of the turning motor 31, it is possible to apply a more appropriate steering reaction force to the steering wheel 5.

(5) In a case where the event in which the output of the turning motor 31 is limited has occurred, the reaction force control device 1A adjusts the assist torque command value T1 such that the assist torque command value T1 is adapted to a normal state in which the output of the turning motor 31 is not limited when the axial force used for calculating the axial torque T2 is switched from the mixed axial force T12 to the angle axial force.

The value of the angle axial force immediately after the axial force is switched from the mixed axial force T12 to the angle axial force may fluctuate with respect to the value of the mixed axial force T12 immediately before the axial force is switched from the mixed axial force T12 to the angle axial force. In this regard, according to the present embodiment, in a case where the event in which the output of the turning motor 31 is limited has occurred, the assist torque command value T1 is adjusted to be adapted to a normal state in which the output of the turning motor 31 is not limited. The steering reaction force is also adjusted according to the adjustment of the assist torque command value T1. Therefore, the fluctuation of the steering reaction force due to the difference in axial force that occurs before and after the axial force used for calculating the axial torque T2 is switched from the mixed axial force T12 to the angle axial force can be suppressed.

(6) The reaction force control device 1A calculates the basic assist torque T11 and calculates the assist torque command value T1 by multiplying the calculated basic assist torque T11 by the gain $G_p$ corresponding to the vehicle speed V. In a case where the event in which the output of the turning motor 31 is limited has occurred, the reaction force control device 1A adjusts the value of the gain $G_p$ such that the assist torque command value T1 is adapted to a normal state in which the output of the turning motor 31 is not limited. With this configuration, in a case where the event in which the output of the turning motor 31 is limited has occurred, the assist torque command value T1 is adjusted to be adapted to a normal state in which the output of the turning motor 31 is not limited. Therefore, the fluctuation of the steering reaction force due to the difference in axial force that occurs before and after the axial force used for calculating the axial torque T2 is switched from the mixed axial force T12 to the angle axial force can be suppressed.

(7) The axial force used for calculating the axial torque T2 is an axial force obtained by adding the deviation compensation axial force T13 calculated based on the angle deviation $\Delta\theta_s$ to the mixed axial force T12. In a case where the event in which the output of the turning motor 31 is limited has occurred, the reaction force control device 1A increases the value of the deviation compensation axial force T13 as compared with a normal state in which the output of the turning motor 31 is not limited. With this configuration, in a case where the event in which the output of the turning motor 31 is limited has occurred, the value of the deviation compensation axial force T13 increases as compared with a normal state in which the output of the turning motor 31 is not limited. Therefore, a decrease in turning follow-up capability of the turning wheels 6 with respect to the steering of the steering wheel 5 can be reflected in the steering reaction force. The angle deviation $\Delta\theta_s$ is a state variable that reflects the turning follow-up capability of the turning wheels 6 with respect to the steering of the steering wheel 5.

(8) The reaction force control device 1A executes the first limitation processing in a case where the first event B1 or the fourth event B4 has occurred. By executing the first limitation processing, the driver of the vehicle can be given a steering feel that the steering wheel 5 is heavy as responsive feeling through the steering wheel 5. The driver of the vehicle can recognize that the first event B1 or the fourth event B4 has occurred by feeling the steering reaction force through the steering wheel 5 as responsive feeling. The driver of the vehicle can appropriately cope with the occurrence of the first event B1 or the fourth event B4. The coping is to continue steering the steering wheel 5 in consideration of the occurrence of the first event B1 or the fourth event B4. For example, the driver of the vehicle can reduce a load on the turning motor 31 by reducing the steering of the steering wheel 5.

(9) The steering torque limitation processing unit 81 executes the second limitation processing in a case where the second event has occurred. By executing the second limitation processing, the driver of the vehicle can be given a steering feel with a sense of hooking as responsive feeling through the steering wheel 5. The driver of the vehicle can recognize that the second event B2 has occurred by feeling the steering reaction force through the steering wheel 5 as responsive feeling. The driver of the vehicle can appropriately cope with the occurrence of the second event B2. The coping is, for example, battery replacement or maintenance.

(10) The steering torque limitation processing unit 81 executes the third limitation processing in a case where the third event has occurred. By executing the third limitation processing, the driver of the vehicle can be given a steering feel that the steering wheel 5 is gradually pushed back or a steering feel with a sense of hitting an end as responsive feeling through the steering wheel 5. The driver of the vehicle can recognize that the third event B3 has occurred by feeling the steering reaction force through the steering wheel 5 as responsive feeling. The driver of the vehicle can appropriately cope with the occurrence of the third event B3. The coping is to continue steering the steering wheel 5 in consideration of the occurrence of the third event B3. For example, the driver of the vehicle can reduce a load on the turning motor 31 by steering the steering wheel 5 to eliminate contact between the turning wheel 6 and an obstacle.

Other Embodiments

The present embodiment may be implemented with the following changes.

The event in which the output of the turning motor 31 is limited is not limited to the first to fourth events B1 to B4. The event in which the output of the turning motor 31 is limited may further include the following fifth to seventh events B5 to B7.

B5. A backup power source is operated.

B6. The vehicle speed V detected through the vehicle speed sensor 41 is abnormal.

B7. The drive mode of the turning motor 31 is an independent drive mode.

The backup power source is a power source device that backs up power supply to each part of the vehicle in a case where the battery which is a main power source fails. The current limitation processing unit 66 determines that the fifth event B5 has occurred when a power source of the vehicle is switched from the main power source to the backup power source. In a case where the fifth event B5 has occurred, the command generation unit 85 generates the first to fourth commands S1 to S4 in the same manner as in a case where the first event B1 has occurred.

The current limitation processing unit 66 determines that the sixth event B6 in which the vehicle speed V is abnormal has occurred, for example, in a case where the vehicle speed V is suddenly changed or in a case where the vehicle speed V is not detected even though the vehicle is traveling. In a case where the sixth event B6 has occurred, the command generation unit 85 generates the first to fourth commands S1 to S4 in the same manner as in a case where the first event B1 has occurred.

The independent drive mode is a drive mode in a case where any one of the two systems is not determined to be abnormal even though an abnormality is detected and there is a possibility of recovery to a normality. In the independent drive mode, a torque is generated in a winding group of a system in which the abnormality is not detected. The current limitation processing unit 66 determines that the seventh event B7 has occurred, for example, in a case where an abnormality determination signal $S_d$ generated by an abnormality determination unit of the turning control device 1B indicates that any one of the two systems is determined to be abnormal. In a case where the seventh event B7 has occurred, the command generation unit 85 generates the first to fourth commands S1 to S4 in the same manner as in a case where the second event B2 has occurred.

The current limitation processing unit 66 may set the value of the current limitation flag $F_{lim}$ according to the temperature $T_m$ of the turning motor 31 when determination is made that the first event B1 in which the temperature $T_m$ of the turning motor 31 excessively increases has occurred. When the temperature $T_m$ of the turning motor 31 exceeds a first temperature threshold value, the current limitation processing unit 66 sets the value of the current limitation flag $F_{lim}$ to "1A". When the temperature $T_m$ of the turning motor 31 exceeds a second temperature threshold value, the current limitation processing unit 66 sets the value of the current limitation flag $F_{lim}$ to "1B". The second temperature threshold value is higher than the first temperature threshold value. When the temperature $T_m$ of the turning motor 31 exceeds a third temperature threshold value, the current limitation processing unit 66 sets the value of the current limitation flag $F_{lim}$ to "1C". The third temperature threshold value is higher than the second temperature threshold value. In a case where the value of the current limitation flag $F_{lim}$ is "1A", "1B", or "1C", the command generation unit 85 generates the following first to fourth commands S1 to S4.

The first command S1 is a command to instruct the steering torque limitation processing unit 81 to execute the first limitation processing shown in FIG. 4, and is a command that specifies the first upper limit value $T_{h\_UL1}$ and the first lower limit value $T_{h\_LL1}$. Note that an absolute value of the first upper limit value $T_{h\_UL1}$ and an absolute value of the first lower limit value $T_{h\_LL1}$ are smaller in the order of "1A", "1B", and "1C" of the value of the current limitation flag $F_{lim}$. That is, the absolute value of the first upper limit value $T_{h\_UL1}$ and the absolute value of the first lower limit value $T_{h\_LL1}$ decreases stepwise as the temperature $T_m$ of the turning motor 31 increases. The driver of the vehicle can recognize that the first event B1 in which the temperature $T_m$ of the turning motor 31 excessively increases has occurred, and thus a degree of increase in temperature of the turning motor 31 by feeling the steering reaction force through the steering wheel 5 as responsive feeling. The second to fourth commands S2 to S4 are the same as those in a case where the value of the current limitation flag $F_{lim}$ is "1" in the above embodiment. The first event B1 is an example of an abnormality of the turning motor 31.

The current limitation processing unit 66 may set the value of the current limitation flag $F_{lim}$ according to the value of the voltage $V_b$ when determination is made that the second event B2 in which the voltage $V_b$ input to the turning control device 1B decreases has occurred. When the value of the voltage $V_b$ is lower than a first voltage threshold value, the current limitation processing unit 66 sets the value of the current limitation flag $F_{lim}$ to "2A". When the value of the voltage $V_b$ is lower than a second voltage threshold value, the current limitation processing unit 66 sets the value of the current limitation flag $F_{lim}$ to "2B". The second voltage threshold value is smaller than the first voltage threshold value. When the value of the voltage $V_b$ is lower than a third voltage threshold value, the current limitation processing unit 66 sets the value of the current limitation flag $F_{lim}$ to "2C". The third voltage threshold value is smaller than the second voltage threshold value. When the value of the current limitation flag $F_{lim}$ is "2A", "2B", or "2C", the command generation unit 85 generates the following first to fourth commands S1 to S4.

The first command S1 is a command to instruct the steering torque limitation processing unit 81 to execute the second limitation processing shown in FIG. 5, and is a command that specifies the second upper limit value $T_{h\_UL2}$ and the second lower limit value $T_{h\_LL2}$ of the first dead band. Note that an absolute value of the second upper limit value $T_{h\_UL2}$ and an absolute value of the second lower limit value $T_{h\_LL2}$ are larger in the order of "2C", "2B", and "1A" of the value of the current limitation flag $F_{lim}$. That is, the absolute value of the second upper limit value $T_{h\_UL2}$ and the absolute value of the second lower limit value $T_{h\_LL2}$ increases stepwise as the voltage $V_b$ input to the turning control device 1B decreases. In other words, a width of the first dead band expands stepwise as the voltage $V_b$ input to the turning control device 1B decreases. The driver of the vehicle can recognize that the second event B2 in which the voltage $V_b$ input to the turning control device 1B decreases has occurred, and thus a degree of decrease in the voltage $V_b$ input to the turning control device 1B by feeling the steering reaction force through the steering wheel 5 as responsive feeling. The second to fourth commands S2 to S4 are the same as those in a case where the value of the current limitation flag $F_{lim}$ is "1". The second event B2 is an example of an abnormality of the vehicle.

The current limitation processing unit 66 may set the value of the current limitation flag $F_{lim}$ according to the voltage of the battery detected through the voltage sensor.

In a case where the first to seventh events B1 to B7 have simultaneously occurred, an event having a higher priority may be given priority. For example, the priority increases in the order of the fifth event B5, the fourth event B4, the sixth event B6, the second event B2, the third event B3, the first event B1, and the seventh event B7. The priority is set based on, for example, a warning level of the event.

In a case where the event in which the output of the turning motor 31 is limited has occurred, the reaction torque command value calculation unit 52 may limit the basic assist torque T11 instead of the steering torque $T_h$. The assist torque command value T1 decreases by an amount by which the basic assist torque T11 is limited. Since the reaction torque command value T* increases by an amount by which the assist torque command value T1 decreases, the steering reaction force applied to the steering wheel 5 increases. Therefore, the driver of the vehicle can recognize that the output of the turning motor 31 is limited by feeling the steering reaction force through the steering wheel 5 as responsive feeling. The reaction torque command value calculation unit 52 may vary a limitation mode of the basic assist torque T11 depending on the contents of the event in which the output of the turning motor 31 is limited, as in a case of limiting the steering torque $T_h$.

In a case where the event in which the output of the turning motor 31 is limited has occurred, the reaction torque command value calculation unit 52 may limit the assist torque command value T1 instead of the steering torque $T_h$. Since the reaction torque command value T* increases by an amount by which the assist torque command value T1 is limited, the steering reaction force applied to the steering wheel 5 also increases. Therefore, the driver of the vehicle can recognize that the output of the turning motor 31 is limited by feeling the steering reaction force through the steering wheel 5 as responsive feeling. The reaction torque command value calculation unit 52 may vary a limitation mode of the assist torque command value T1 depending on the contents of the event in which the output of the turning motor 31 is limited, as in a case of limiting the steering torque $T_h$.

**Claims**

1. A steering control device (1) **characterized by** comprising a processing circuit configured to

   control a reaction force motor (12) configured to generate a steering reaction force applied to a steering wheel (5) that is separated from turning wheels (6) of a vehicle in terms of power transmission,

control a turning motor (31) configured to generate a turning force for turning the turning wheels (6), and

execute reaction force change processing of, in a case where an event in which an output of the turning motor (31) is limited has occurred, changing the steering reaction force according to contents of the event.

2. The steering control device (1) according to claim 1, **characterized in that**:

the processing circuit is configured to execute

processing of calculating an assist torque command value that is a torque in the same direction as a steering direction of the steering wheel (5) based on a first state variable reflecting a steering state of the steering wheel (5),

processing of calculating an axial force acting on a turning shaft that turns the turning wheels (6) based on a second state variable reflecting a turning state of the turning wheels (6) and calculating an axial torque by converting the calculated axial force into a torque with respect to the steering wheel (5), and

processing of calculating a reaction torque command value that is a target value of the steering reaction force by subtracting the axial torque from the assist torque command value; and

the reaction force change processing includes processing of changing the assist torque command value and processing of changing the axial torque.

3. The steering control device (1) according to claim 2, **characterized in that**:

the first state variable is a steering torque applied to the steering wheel (5); and

the processing of changing the assist torque command value is processing of limiting the steering torque detected by a torque sensor according to the contents of the event.

4. The steering control device (1) according to claim 2 or 3, **characterized in that**:

the second state variable includes a current of the turning motor (31) and a target rotation angle of a pinion shaft (21) configured to rotate in conjunction with the turning shaft;

the axial force includes a mixed axial force in which a current axial force corresponding to a value of the current of the turning motor (31) and an angle axial force corresponding to the target rotation angle of the pinion shaft (21) are mixed; and

the processing circuit is configured to, in the case where the event has occurred, execute processing of switching the axial force from the mixed axial force to the angle axial force.

5. The steering control device (1) according to claim 4, **characterized in that** the processing circuit is configured to, in the case where the event has occurred, execute processing of adjusting the assist torque command value such that the assist torque command value is adapted to a normal state in which the output of the turning motor (31) is not limited, when the axial force is switched from the mixed axial force to the angle axial force.

6. The steering control device (1) according to claim 5, **characterized in that**:

the processing circuit is configured to

calculate a basic assist torque that is a basis for calculating the assist torque command value, based on the first state variable, and calculate the assist torque command value by multiplying the calculated basic assist torque by a gain corresponding to a vehicle speed; and

the processing of adjusting the assist torque command value is processing of adjusting a value of the gain such that the assist torque command value is adapted to the normal state in which the output of the turning motor (31) is not limited.

7. The steering control device (1) according to claim 4, **characterized in that**:

the axial force is an axial force obtained by adding a deviation compensation axial force corresponding to an angle deviation which is a difference between a steering angle of the steering wheel (5) and a steering angle of the steering wheel (5) converted from a rotation angle of the pinion shaft (21), to the mixed axial force; and

the processing circuit is configured to, in the case where the event has occurred, execute processing of increasing a value of the deviation compensation axial force as compared with a normal state in which the output of the turning motor (31) is not limited.

8. The steering control device (1) according to any one of claims 1 to 3, **characterized in that**:

the event includes an abnormality of the vehicle or the turning motor (31); and
the processing circuit is configured to increase the steering reaction force as a degree of the abnormality increases.

FIG. 1

# FIG. 2

# FIG. 3

# FIG. 4

# FIG. 5

# FIG. 6

## FIG. 7

## FIG. 8

Europäisches
Patentamt

European
Patent Office

Office européen
des brevets

# EUROPEAN SEARCH REPORT

**Application Number**

EP 24 21 5419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/249977 A1 (THYSSENKRUPP PRESTA AG [LI]; THYSSENKRUPP AG [DE]) 16 December 2021 (2021-12-16) | 1,8 | INV. B62D15/02 B62D6/00 |
| A | * page 4, line 10 - line 16 * * page 6, line 17 - page 9, line 24 * * figures * | 2-7 | B62D5/04 |
| A | US 2023/286569 A1 (MIYAKE JUNYA [JP] ET AL) 14 September 2023 (2023-09-14) * paragraphs [0037] - [0037], [0053] - [0057]; figures 1,2 * | 1-4 | |

-----

-----

**TECHNICAL FIELDS SEARCHED (IPC)**

B62D

The present search report has been drawn up for all claims

| Place of search | Date of completion of the search | Examiner |
|---|---|---|
| The Hague | 15 April 2025 | Kulozik, Ehrenfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 5419

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| WO 2021249977 A1 | 16-12-2021 | DE 102020207264 A1 | 16-12-2021 |
| | | EP 4164936 A1 | 19-04-2023 |
| | | WO 2021249977 A1 | 16-12-2021 |
| US 2023286569 A1 | 14-09-2023 | CN 116729471 A | 12-09-2023 |
| | | EP 4242087 A1 | 13-09-2023 |
| | | JP 2023131351 A | 22-09-2023 |
| | | US 2023286569 A1 | 14-09-2023 |

EPO FORM P0459

For more details about this annex : see Official Journal of the European Patent Office, No. 12/82

**EP 4 570 626 A1**

## REFERENCES CITED IN THE DESCRIPTION

**Patent documents cited in the description**

- JP 2020083059 A